Europäisches Patentamt

European Patent Office

Office européen des brevets

(19)

(11) Numéro de publication : **0 134 374**
**B1**

(12) # FASCICULE DE BREVET EUROPÉEN

(45) Date de publication du fascicule du brevet :
02.12.87

(51) Int. Cl.⁴ : **H 04 L   7/02**

(21) Numéro de dépôt : 83430029.5

(22) Date de dépôt : 07.09.83

(54) **Horloge à verrouillage de phase.**

(43) Date de publication de la demande :
20.03.85 Bulletin 85/12

(45) Mention de la délivrance du brevet :
02.12.87 Bulletin 87/49

(84) Etats contractants désignés :
DE FR GB

(56) Documents cités :
GB-A- 2 099 246
US-A- 3 983 498
US-A- 4 057 768
IBM TECHNICAL DISCLOSURE BULLETIN, vol. 16,
no. 3, août 1973, page 837, New York, US; J.M.BRAND-
NER et al.: "Synchronizer for valid distorted periodic
or aperiodic data"
PATENTS ABSTRACTS OF JAPAN, vol. 6, no. 164(E-
127)(1042), 27 août 1982

(73) Titulaire : **International Business Machines Corporation**
**Old Orchard Road**
**Armonk, N.Y. 10504 (US)**
**DE GB**
**Compagnie IBM FRANCE**
**5 Place Vendôme**
**F-75000 Paris 1er (FR)**
**FR**

(72) Inventeur : **Cukier, Maurice**
**567 Vieille route de Carros**
**F-06510 Gattieres (FR)**

(74) Mandataire : **Tubiana, Max**
**Compagnie IBM France Département de Propriété**
**Industrielle**
**F-06610 La Gaude (FR)**

EP 0 134 374 B1

Jouve, 18, rue St-Denis, 75001 Paris, France

**0 134 374**

## Description

### Domaine de l'Invention

L'invention se situé dans le domaine des transmissions numériques. Elle concerne plus spécialement les horloges utilisant des oscillateurs à verrouillage de phase, plus simplement désignées parfois par l'expression horloges à verrouillage de phase.

### Etat de la Technique

On utilise souvent des modulateurs/démodulateurs (modems) numériques pour transmettre les bits des données fournies par plusieurs terminaux. En principe, le rythme auquel un terminal donné fournit ses bits dépend du type de ce terminal. En outre, le modem est conçu pour grouper et transmettre à un rythme qui lui est propre les bits d'un ou plusieurs terminaux différents. Tous ces rythmes sont définis par des dispositifs, dits horloges, incorporés dans chacun des éléments, à savoir, dans le modem de même que dans chaque terminal.

On comprend aisément qu'il faille synchroniser entre elles toutes ces horloges pour éviter des pertes d'informations à transmettre. On utilise en général, dans le modem, une horloge dite interne comportant un dispositif dit oscillateur à verrouillage de phase (PLO en terminologie anglo-saxonne). Cette horloge interne est synchronisée sur l'horloge (dite horloge de référence ou horloge externe) d'un des terminaux choisi de manière prédéterminée parmi les terminaux actifs à desservir par le modem. Le signal de l'horloge interne synchronisée sert ensuite à engendrer les signaux d'horloges destinés à commander le fonctionnement des autres terminaux actifs aux rythmes propres à chacun desdits terminaux.

Le réglage de l'horloge interne doit naturellement être réalisé aussi rapidement que possible en régime permanent, c'est-à-dire lorsque la configuration des terminaux actifs est figée et que les phases des différentes horloges du système varient légèrement. Or, en pratique, cette configuration peut changer à un instant donné. Le réglage de l'horloge interne doit alors être entièrement refait.

Les oscillateurs à verrouillage de phase de l'art antérieur (voir brevet US 3 983 498) comportent en général un oscillateur à quartz délivrant un signal périodique de fréquences F et un comparateur de phase commandant les variations du coefficient de division d'un diviseur de fréquence. Ce diviseur qui est donc variable est lui-même composé d'un dispositif logique de décodage suivi d'un compteur binaire. Le compteur binaire à n étages est conçu pour compter jusqu'à $N = 2^n - 1$ au rythme de l'oscillateur à quartz avant de changer le niveau logique de sa sortie. En régime normal, le dispositif logique de décodage force initialement le compteur binaire à « 2 » (en valeur décimale). Cela revient à diré que ledit compteur compte $N - 1$ périodes avant de revenir à son état initial. La fréquence du signal délivré par l'oscillateur à verrouillage de phase est donc égale à $F/(N - 1)$. Selon la valeur de l'écart de phase entre le signal de l'horloge externe et celui de l'horloge interne (PLO), le coefficient de division doit augmenter (par exemple prendre la valeur N) ou diminuer (prendre la valeur $N - 2$ par exemple). Ceci est réalisé en pratique en fonçant initialement le compteur binaire à 1 (pour N) ou à 3 ( pour $N - 2$) de manière à diminuer rapidement l'écart entre les phases des horloges externe et interne.

De ce qui précède, on comprend que le changement du coefficient de division ne puisse être réalisé qu'au début d'une période de comptage du compteur binaire. Or les ordres délivrés par le comparateur de phase sont en pratique fugitifs. Il est donc nécessaire de les mémoriser pour pouvoir les exécuter en changeant le coefficient de division dès que possible. En outre, une fois l'ordre exécuté, il faut remettre la . mémoire à un état correspondant à la vitesse normale, c'est-à-dire permettant une division de la fréquence F par $N - 1$.

En outre, les ordres de modification du coefficient de division ne peuvent être exécutés plus vite que la période du compteur binaire.

### Brève Description de l'Invention

La présente invention a pour objet un oscillateur à verrouillage de phase dans lequel les ordres de correction par modification du coefficient de division de la fréquence de l'oscillateur à quartz peuvent être exécutés quasi immédiatement et sans mémorisation.

Plus précisément, la présente invention se caractérise par l'emploi d'un dispositif de multiplexage commandé par la sortie du comparateur de phase, ledit multiplexeur recevant sur ses entrées les sorties de N' circuits dits de décodage rapide effectuant en parallèle N' comptages binaires correspondant à N' réglages prédéterminés de l'oscillateur à verrouillage de phase, chaque décodeur procédant à l'addition ou à la soustraction d'une valeur prédéterminée à la valeur numérique appliquée sur son entrée, et la sortie du comparateur de phase choisissant l'un des décodeurs.

D'autres objets, caractéristiques et avantages de la présente invention, ressortiront de la description suivante faite en référence aux dessins annexés.

2

**0 134 374**

Brève Description des Figures

Figure 1   schéma de principe d'un dispositif de l'art antérieur.
Figure 2   mode de réalisation d'un des éléments du dispositif de la figure 1.
Figure 3   diagramme d'états du dispositif de la figure 2.
Figure 4   schéma de principe du dispositif de l'invention.
Figure 6 à 8   modes de réalisation de circuits de l'invention.

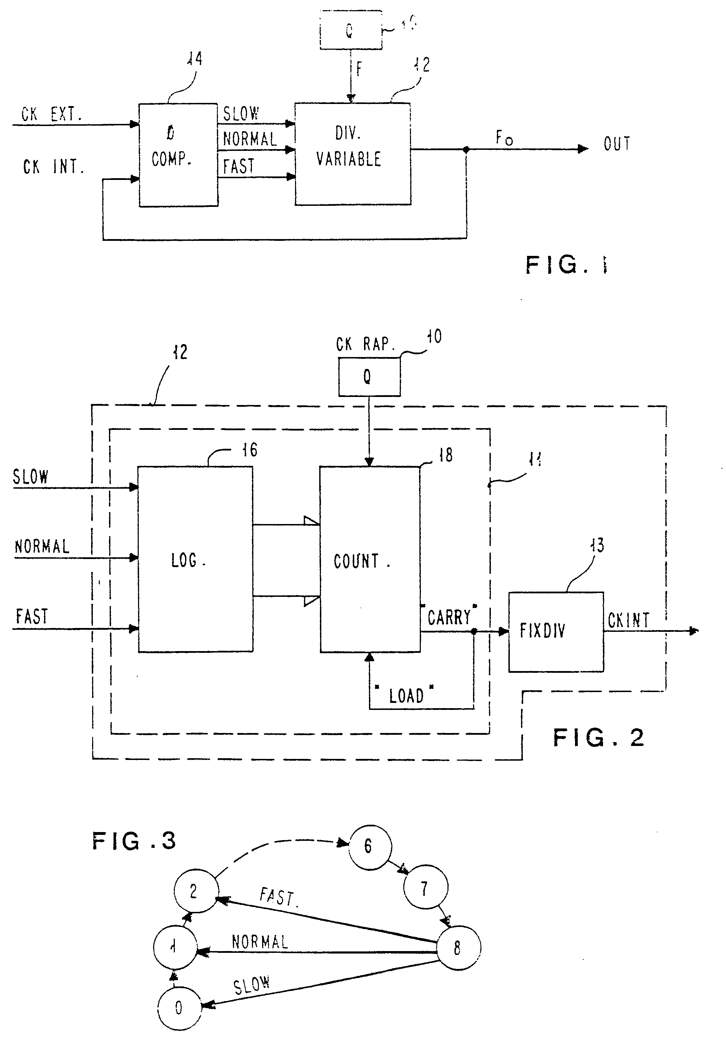

La figure 1 représente le schéma de principe d'une horloge utilisant un oscillateur à verrouillage de phase de l'art antérieur. Un signal de fréquence $F >> Fo$, Fo étant la fréquence de l'horloge interne (CK INT.) que l'on cherche à engendrer, est fourni par un oscillateur à quartz (Q) 10. Ce signal de fréquence F dit signal d'horloge rapide est introduit dans un diviseur variable 12. Le coefficient du diviseur variable 12 est réglé en fonction des indications fournies par un comparateur de phase 14. Trois possibilités de réglage du coefficient de division ont été prévues dans le cas présent. L'une est dite normale et dans ce cas, le coefficient de division est fixé à $N - 1$. Les autres sont dites rapide (Fast) et lente (slow) et correspondent respectivement à des coefficients de division égaux à $N - 2$ et N. Le comparateur de phase 14 compare la phase du signal de l'horloge interne (CK INT) avec celle du signal (CK EXT) de l'horloge de référence dite horloge externe.

La figure 2 représente un mode de réalisation du diviseur variable 11 suivi d'un diviseur fixe 13. En effet, en pratique, pour réaliser le diviseur variable 12 représenté sur la figure 1, on utilise un diviseur variable 11 (diviseur par $8 \pm 1$) suivi d'un diviseur fixe 13 de valeur plus élevée (diviseur par 20).

Le diviseur variable 11 comporte un dispositif logique 16 commandant un compteur binaire 18. Ce compteur est par exemple conçu pour compter modulo 9, c'est-à-dire de zéro à 8 (en valeur décimale) avant de changer le niveau logique de la sortie de report (carry). Cette sortie est utilisée pour ramener le compteur à l'état initial et recommencer le cycle de comptage. Selon l'ordre appliqué à l'entrée du dispositif logique 16, le compteur 18 commencera à compter à partir de 0, 1 ou 2 comme le montre la figure 3. Le circuit logique 16 comporte donc des moyens permettant de convertir l'ordre fourni par le comparateur de phase 14 en une valeur numérique égale à 0, 1 ou 2 en décimal ; et des moyens pour emmagasiner ladite valeur numérique jusqu'à ce que le compteur binaire arrive à la limite de son comptage (soit 8) et revienne à zéro. A ce moment, la valeur numérique 0, 1 ou 2 emmagasinée, et chargée dans le compteur binaire pour être utilisée comme valeur initiale.

Donc, non seulement des moyens d'emmagasinage de l'ordre fourni par le comparateur de phase 14 sont nécessaires, mais en outre l'ordre destiné à assurer le réglage de l'horloge à verrouillage de phase ne peut être exécuté immédiatement.

On notera qu'en pratique, l'horloge à verrouillage de phase est réglée en accélérant ou ralentissant le compteur 18 durant un seul cycle de comptage dudit compteur. Le compteur passe ensuite au comptage normal jusqu'à ce qu'un autre ordre d'accélération ou de ralentissement apparaisse à l'entrée du diviseur variable.

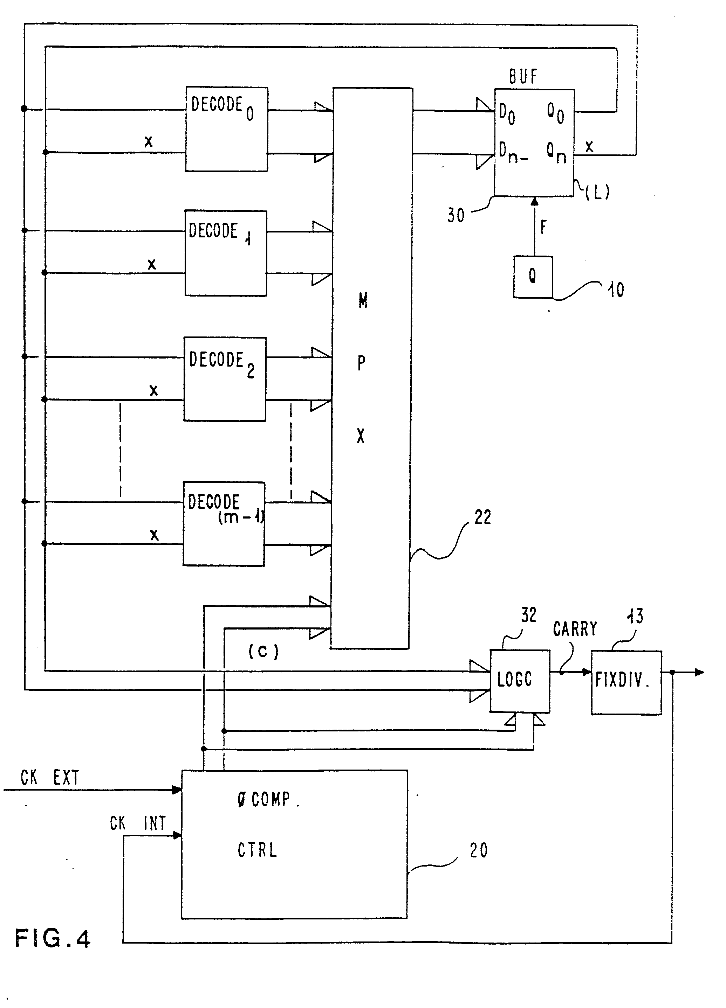

La figure 4 représente le schéma de principe de l'horloge à verrouillage de phase de l'invention destinée à remédier aux inconvénients sus-mentionnés.

On y trouve un dispositif de comparaison de phase et de commande (20) d'où sort un bus (C) à plusieurs lignes de commande. L'information placée sur ces lignes de commande (information dite de commande correction) indique si l'horloge interne est en avance ou en retard par rapport à l'horloge externe. Elle peut aussi fournir une indication de quantification de l'écart entre lesdites horloges.

L'information placée sur le bus C par le circuit de comparaison de phase et de commande oriente vers la sortie d'un multiplexeur 22, l'information numérique fournie par l'un des décodeurs $DECODE_0$ à $DECODE_{(m-1)}$. Ces décodeurs transforment respectivement la valeur numérique x à n bits placée sur leur entrée en des valeurs numériques telles que x, $x \pm 1$, $x \pm 2$, etc. Autrement dit, chacun des « décodeurs » ajoute ou retranche une valeur numérique prédéterminée à la valeur numérique appliquée sur son entrée. Par exemple, pour $m = 3$, les valeurs numériques décodées peuvent être x, $x + 1$, $x + 2$. La valeur numérique apparaissant à la sortie du multiplexeur 22 est emmagasinée dans un registre tampon 30 formé de bascules bi-stables (L). Le contenu du registre tampon 30 est transféré vers l'entrée des décodeurs $DECODE_0$ à $DECODE_{(m-1)}$ au rythme F de l'oscillateur local à quartz 10 (dit aussi horloge rapide).

Enfin, un dispositif dit de logique de report (LOGC) 32, placé lui aussi à la sortie du registre 30 fournit après division de fréquence fixe en (FIXDIV) 13, l'information dite d'horloge interne (CKINT) à appliquer sur la seconde entrée du comparateur de phase 20 dont la première entrée du comparateur de phase 20 dont la première entrée reçoit le signal de l'horloge externe (CK EXT).

Tant qu'aucune transition du signal d'horloge externe n'apparaît, le comparateur de phase choisit le décodeur dont la sortie fournit $x + 1$. L'ensemble décodeur, multiplexeur, registre tampon se comporte alors comme un simple compteur modulo une valeur numérique prédéterminée donnée (par exemple 9).

Dès qu'une transition du signal d'horloge externe apparaît, le comparateur de phase choisit en fonction de l'écart de phase à corriger, le décodeur à multiplexer pour assurer la correction de phase adéquate. L'amplitude de la correction de phase peut ainsi être commandée.

On a vu plus haut que la fonction de division variable nécessaire à la réalisation de l'horloge à verrouillage de phase était assurée par un compteur variable. Ce principe reste valable pour le dispositif

3

de l'invention. A ceci près qu'une plus grande souplesse de fonctionnement du compteur variable est assurée par l'invention.

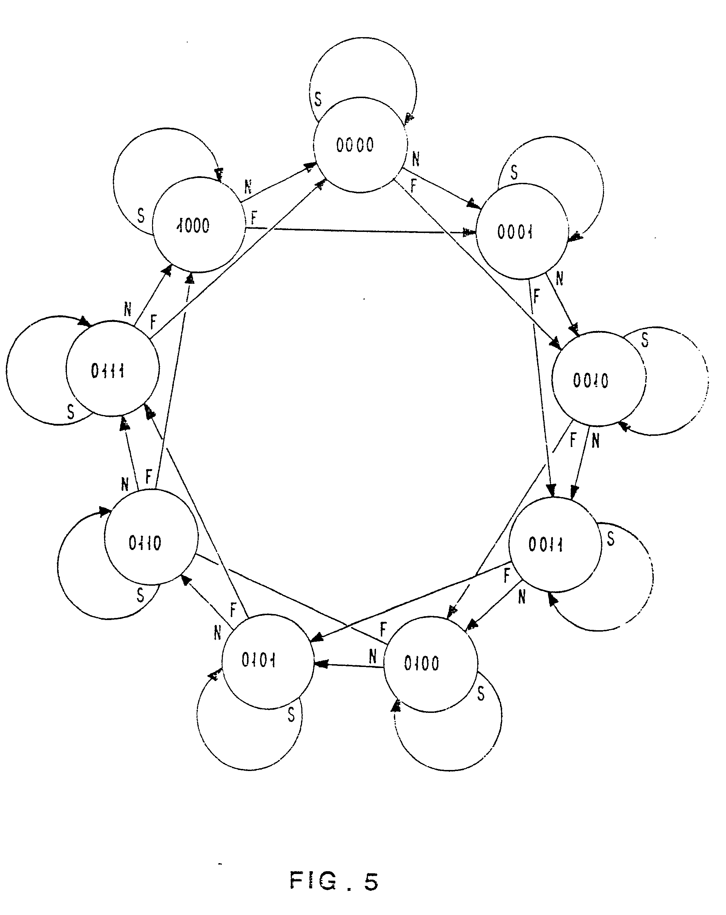

On a représenté sur la figure 5, un diagramme d'état d'un compteur modulo 9, c'est-à-dire d'un compteur comptant de zéro (000 en binaire) à 8 (1000 en binaire). Ce compteur peut à tout instant, soit rester sur la position sur laquelle il se trouve (dans ce cas, un signal logique $S = 1$), soit passer à l'état immédiatement suivant (alors $N = 1$), soit sauter un état (dans ce cas, $F = 1$). Les signaux N, F, S sont ceux engendrés par le dispositif de commande de comparaison de phase 20 et placés sur le bus « C ».

Tant qu'aucune transition positive au signal d'horloge externe n'est détectée ($N = 1$ et $F = S = 0$), le comptage s'effectue normalement par addition d'une unité à chaque cycle de l'oscillateur 10. Lorsque le comparateur de phase 20 détecte un flanc ascendant du signal d'horloge externe coïncidant avec un niveau logique bas de l'horloge interne $CKINT = 0$, il commande une accélération ($F = 1$) de l'horloge.

Un état est sauté à chaque étape de comptage. Dans ce cas ($N = 0$, $F = 1$, $S = 0$). Enfin, dans le cas inverse, c'est-à-dire lorsqu'un flanc ascendant du signal d'horloge externe coïncide avec un niveau logique haut du signal CK INT, le comparateur de phase 20 décide de ralentir le processus de comptage, le compteur est bloqué ($N = F = 0$, $S = 1$).

Les trois conditions N, F, S sont donc mutuellement exclusives :

$$N + F + S = 1$$
$$N \cdot F + N \cdot S + F \cdot S = 0$$

Le décodeur DECODE 1 effectuant les opérations $x \rightarrow x + 1$ ($N = 1$, $F = 0$, $S = 0$) obéit aux relations suivantes :

| ETAT PRESENT | | | | | ETAT SUIVANT | | | |
|---|---|---|---|---|---|---|---|---|
| $Q_0$ | $Q_1$ | $Q_2$ | $Q_3$ | | $D_0$ | $D_1$ | $D_2$ | $D_3$ |
| 0 | 0 | 0 | 0 | | 0 | 0 | 0 | 1 |
| 0 | 0 | 0 | 1 | | 0 | 0 | 1 | 0 |
| 0 | 0 | 1 | 0 | | 0 | 0 | 1 | 1 |
| 0 | 0 | 1 | 1 | | 0 | 1 | 0 | 0 |
| 0 | 1 | 0 | 0 | | 0 | 1 | 0 | 1 |
| 0 | 1 | 0 | 1 | | 0 | 1 | 1 | 0 |
| 0 | 1 | 1 | 0 | | 0 | 1 | 1 | 1 |
| 0 | 1 | 1 | 1 | | 1 | 0 | 0 | 0 |
| 1 | 0 | 0 | 0 | | 0 | 0 | 0 | 0 |

Donc

$$D_0 = \bar{Q}_0\, Q_1\, Q_2\, Q_3$$
$$D_1 = \bar{Q}_1 \oplus Q_2\, Q_3$$
$$D_2 = Q_2 \oplus Q_3$$
$$D_3 = \bar{Q}_0\, \bar{Q}_3$$

Le décodeur DECODE 2 effectuant l'opération $x \rightarrow x + 2$ ($N = 0$, $F = 1$, $S = 0$) obéit aux relations suivantes :

(Voir schéma page 5)

| ETAT PRESENT | | | | | ETAT SUIVANT | | | |
|---|---|---|---|---|---|---|---|---|
| $Q_0$ | $Q_1$ | $Q_2$ | $Q_3$ | | $D_0$ | $D_1$ | $D_2$ | $D_3$ |
| 0 | 0 | 0 | 0 | | 0 | 0 | 1 | 0 |
| 0 | 0 | 1 | 0 | | 0 | 1 | 0 | 0 |
| 0 | 1 | 0 | 0 | | 0 | 1 | 1 | 0 |
| 0 | 1 | 1 | 0 | | 1 | 0 | 0 | 0 |
| 1 | 0 | 0 | 0 | | 0 | 0 | 0 | 1 |
| 0 | 0 | 0 | 1 | | 0 | 0 | 1 | 1 |
| 0 | 0 | 1 | 1 | | 0 | 1 | 0 | 1 |
| 0 | 1 | 0 | 1 | | 0 | 1 | 1 | 1 |
| 0 | 1 | 1 | 1 | | 0 | 0 | 0 | 0 |

$$D_0 = \bar{Q}_0 \, Q_1 \, Q_2 \, \bar{Q}_3$$
$$D_1 = Q_1 \oplus Q_2$$
$$D_2 = \bar{Q}_0 \, \bar{Q}_2$$
$$D_3 = Q_0 + Q_3 \, (\bar{Q}_1 + \bar{Q}_2)$$

Quant au décodeur $DECODE_0$ effectuant l'opération $x \rightarrow x$, il obéit naturellement aux relations :

$$D_0 = Q_0$$
$$D_1 = Q_1$$
$$D_2 = Q_2$$
$$D_3 = Q_3$$

Pour $DECODE_0$ on utilise $(N = F = 0, S = 1)$

Les équations générales de l'ensemble des circuits comportant trois décodeurs ($DECODE_0$ pour $x \rightarrow x$, $DECODE_1$ pour $x \rightarrow x + 1$ et $DECODE_2$ pour $x \rightarrow x + 2$), le multiplexeur 22 avec ses commandes appliquées sur le bus « C » et le registre tampon s'écrivent donc :

$$D_0 = N \, \bar{Q}_0 \, Q_1 \, Q_2 \, Q_3 + F \, \bar{Q}_0 \, Q_1 \, Q_2 \, \bar{Q}_3 + S \, Q_0$$
$$D_1 = N(\bar{Q}_1 \oplus Q_2 \, Q_3) + F(Q_1 \oplus Q_2) + S \, Q_1$$
$$D_2 = N(Q_2 \oplus Q_3) + F \, \bar{Q}_0 \, \bar{Q}_2 + S \, Q_2$$
$$D_3 = N \, \bar{Q}_0 \, \bar{Q}_3 + F[Q_0 + Q_3 \, (\bar{Q}_1 + \bar{Q}_2)] + S \, Q_3$$

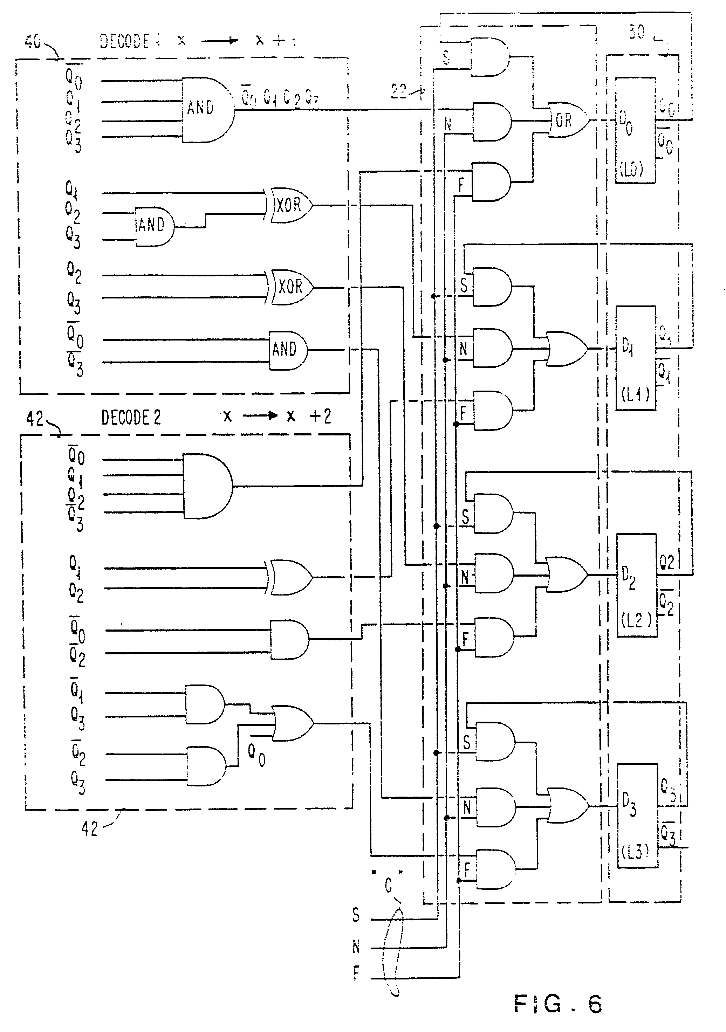

La figure 6 montre un mode de réalisation d'un circuit logique réalisant les fonctions des équations générales définies ci-dessus. On y utilise des circuits logiques conventionnels ET (AND) ; OU (OR) ; OU-Exclusif (XOR) et des bascules $L_0$ à $L_3$. Ces bascules forment le registre tampon 30. Les décodeurs $DECODE_1$ et $DECODE_2$ sont représentés en 40 et 42. Le décodeur $DECODE_0$ est simplement réalisé par rebouclage des sorties $Q_0$, $Q_1$, $Q_2$ et $Q_3$ des bascules $L_0$ à $L_3$ sur le multiplexeur 22 sous le contrôle du signal logique $S = 1$.

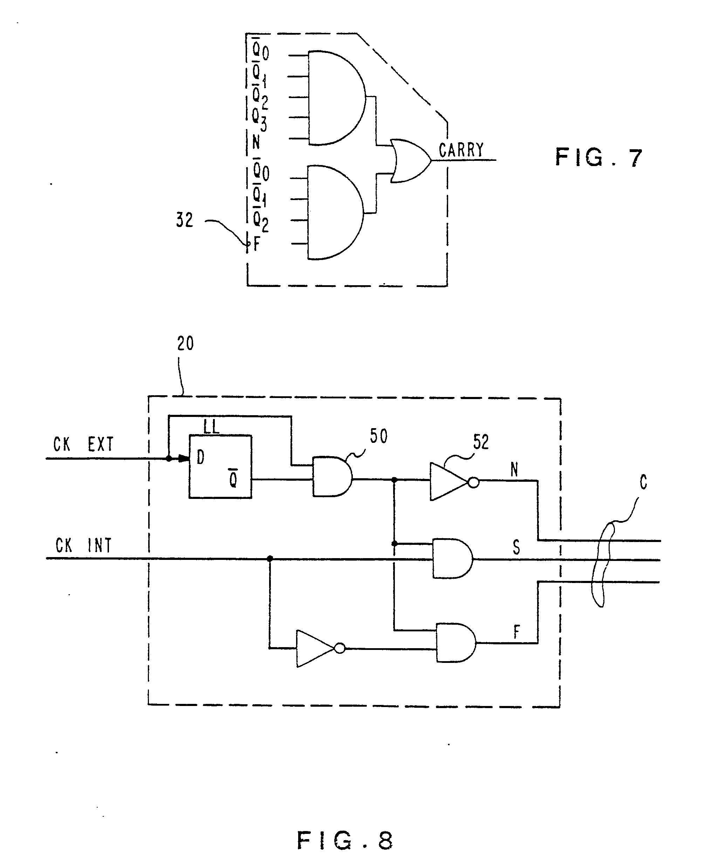

On a représenté de même sur la figure 7 un circuit logique réalisant les opérations du dispositif de report 32 et réalisant la fonction dite « CARRY ».

L'exécution de cette fonction logique a pour but d'augmenter ou de réduire d'une unité le cycle de comptage du compteur variable, et ce d'une façon unique et non ambiguë. En effet, sans cette précaution, le compteur risquerait soit de sauter l'état 0000 en passant de 1000 à 0001 directement (si F = 1) sans le signaler par un « carry », soit de rester et donc repasser par 0000 si S = 1. Ces deux situations empêcheraient de réaliser un diviseur variable de valeur $8 \pm 1$. Cela revient à dire par exemple que l'on veut détecter tous les passages, réels ou fictifs par l'état 0001 du diagramme de la figure 5.

Carry = 1 pour :

$$\bar{Q}_0 \, \bar{Q}_1 \, \bar{Q}_2 \, Q_3 \, N + \bar{Q}_0 \, \bar{Q}_1 \, \bar{Q}_2 \, Q_3 \, F + \bar{Q}_0 \, \bar{Q}_1 \, \bar{Q}_2 \, \bar{Q}_3 \, F$$

d'où la fonction logique carry devient :

$$\bar{Q}_0 \ \bar{Q}_1 \ \bar{Q}_2 \ Q_3 \ N + \bar{Q}_0 \ \bar{Q}_1 \ \bar{Q}_2 \ F = 1.$$

La figure 8 représente un mode de réalisation du comparateur de phase 20. Une bascule LL suivie d'un circuit ET 50 permet de détecter l'apparition d'une transition positive du signal d'horloge externe CK EXT. L'absence de cette transition signalée par un inverseur 52 se traduit, comme on l'a vu plus haut par l'ordre N = 1. Si, par contre, au moment où la transition du signal d'horloge externe est détectée, le niveau logique du signal de l'horloge interne CK INT est haut, on en déduit que l'horloge interne est en avance de phase et donc doit être ralentie (S = 1). Dans le cas inverse où CK INT est bas au moment de l'apparition de la transition du signal d'horloge externe, l'horloge interne doit être accélérée (F = 1).

Le dispositif de l'invention se comporte donc comme une horloge à verrouillage de phase à correction quasi immédiate particulièrement avantageux. En effet, les décisions de modification du cycle du compteur variable n'ont pas à être emmagasinées puisqu'elles peuvent être prises en charge et exécutées à n'importe quelle étape du cycle de comptage. En outre, l'amplitude de la correction peut aisément être modulée en prévoyant plusieurs décodeurs (plus de 3 par exemple).

Ceci peut permettre d'ajuster le réglage du diviseur variable en fonction de l'amplitude du déphasage entre les signaux d'horloges interne et externe. A cet effet, il suffirait de détecter aussi les flancs avants du signal d'horloge interne, de mesurer l'écart en signe et amplitude entre flancs avants d'horloges interne et externe et d'ajuster l'amplitude du saut de comptage en fonction d'une table de correction prédéterminée par quantification dudit écart.

## Revendications

1. Horloge à verrouillage de phase engendrant un signal dit d'horloge interne et synchronisant ledit signal d'horloge interne sur un signal de référence dit d'horloge externe, ladite horloge à verrouillage de phase étant caractérisée en ce qu'elle comporte :
— un dispositif de comparaison de phase et de commande (20) comparant entre elles les phases des signaux des horloges interne et externe et délivrant une information logique de commande de correction dite « rapide » ou « lent » selon le niveau logique du signal d'horloge interne à l'instant défini par l'apparition d'une transition de sens prédéterminé du signal d'horloge externe ;
— un dispositif multiplexeur (22) commandé par ladite information de commande de correction ;
— m circuits décodeurs (DECOD 0 à DECOD (m — 1)) dont les sorties sont connectées à l'entrée dudit multiplexeur et qui procèdent individuellement à l'addition ou à la soustraction d'une valeur prédéterminée à la valeur numérique appliquée sur leurs entrées ;
— un registre tampon (30) connecté à la sortie dudit multiplexeur et commandé par le signal d'un oscillateur local, de manière à renvoyer l'information fournie par le multiplexeur vers les entrées des m circuits décodeurs au rythme défini par l'oscillateur local ;
— un dispositif (32) dit de report connecté aux sorties du registre tampon et du dispositif de comparaison de phase ; et,
— un dispositif diviseur de fréquence connecté audit dispositif de report et délivrant ledit signal d'horloge interne.

2. Horloge à verrouillage de phase selon la revendication 1 caractérisée en ce que m = 3.

3. Horloge à verrouillage de phase selon la revendication 2 caractérisée en ce que ladite information de commande de correction est constituée de trois informations logiques, chacune desdites informations logiques étant destinée à orienter vers la sortie dudit multiplexeur (22), la valeur numérique fournie par l'un des trois décodeurs.

4. Horloge à verrouillage de phase selon la revendication 3 caractérisée en ce que les trois décodeurs (DECOD) effectuent respectivement les opérations consistant à ajouter la valeur numérique zéro, un ou deux à la valeur numérique x appliquée sur leurs entrées.

5. Horloge à verrouillage de phase selon la revendication 4 caractérisée en ce que tant qu'aucun flanc de sens prédéterminé du signal d'horloge externe n'apparaît aux instants définis par le signal de l'oscillateur local (10), le multiplexeur est commandé pour orienter vers le registre tampon, l'information fournie par le décodeur réalisant l'opération x + 1.

6. Horloge à verrouillage de phase selon la revendication 1 caractérisée en ce que le dispositif de comparaison de phase et de commande (20) délivre un ordre d'accélération ou de ralentissement selon que le niveau logique de l'horloge interne est bas ou haut au moment de l'apparition de la transition de sens, prédéterminé du signal d'horloge externe.

## Claims

1. A phase-locked clock for generating a signal termed internal clock signal and causing it to be synchronized with a reference signal termed external clock signal, said phase-locked clock being

6

0 134 374

characterized in that it includes :
— a phase comparator and control device (20) for comparing the phases of said internal and external clock signals and generating logic adjustment command data termed « fast » or « slow » according to the logic level of the internal clock signal at the time defined by the occurrence of a transition of the external clock signal in a predetermined direction,
— a multiplexer (22) controlled by said adjustment command data,
— m decoder circuits (DECOD 0 to DECOD (m — 1)) the outputs of which are connected to the input of said multiplexer, and which individually add a predetermined value to, or subtract said value from, the digital value applied to their inputs,
— a buffer register (30) connected to the output of said multiplexer and controlled by the output signal from a local oscillator, to thereby cause the data supplied by the multiplexer to be fed back to the inputs of said m decoder circuits at a rate defined by the local oscillator,
— a carry device (32) connected to the outputs of said buffer register and of said phase comparator, and
— a frequency divider connected to said carry device for generating said internal clock signal.

2. The phase-locked clock of claim 1, characterized in that m = 3.

3. The phase-locked clock of claim 2, characterized in that said adjustment command data consist of three logic information items each of which serves to transfer to the output of said multiplexer (22) the digital value supplied by one of the three decoders.

4. The phase-locked clock of claim 3, characterized in that said three decoders (DECOD) perform operations whereby the digital value zero, one, or two, respectively, is added to the digital value x applied to the inputs thereof.

5. The phase-locked clock of claim 4, characterized in that, as long as no transition of the external clock signal occurs in a predetermined direction at the times defined by the output signal from the local oscillator (10), the multiplexer is caused to transfer to the buffer register the output from the decoder performing the operation x + 1.

6. The phase-locked clock of claim 1, characterized in that the phase comparator and control device (20) generates a command to either speed up or slow down operation depending on whether the logic level of the internal clock signal is high or low at the time of occurrence of the transition, in a predetermined direction, of the external clock signal.


**Patentansprüche**

1. Uhr mit Phasenverriegelung für die Erzeugung eines sogenannten internen Taktsignals mit Synchronisierung des besagten internen Taktsignals auf ein Referenzsignal, externes Taktsignal genannt, wobei besagte Uhr mit Phasenverriegelung dadurch gekennzeichnet ist, dass sie enthält :
— eine Phasenvergleichs- und Steuervorrichtung (20), die die Phasen der Signale der internen und der externen Uhr miteinander vergleicht und eine logische Berichtigungssteuerinformation abgibt, schnell oder langsam genannt, je nach dem logischen Zustand des internen Taktsignals zu dem Zeitpunkt, der durch das Auftreten eines Übergangs mit vorgegebener Richtung des internen Taktsignals definiert ist ;
— Multiplexiervorrichtung (22), gesteuert durch die besagte Information der Korrektursteuerung ;
— m Dekodierkreise (DECOD 0 bis DECOD (m — 1), deren Ausgänge an den Eingang der besagten Multiplexiervorrichtung angeschlossen sind und die einzeln die Addition oder Substraktion eines vorgegebenen Wertes von dem an ihren Eingängen angelegten Zahlenwert vornehmen ;
— ein Pufferregister (30), angeschlossen an den Ausgang der besagten Multiplexiervorrichtung, gesteuert durch das Signal eines örtlichen Schwingkreises, um die von der Multiplexiervorrichtung abgegebene Information an die Eingänge der m Dekodierkreise in dem vom örtlichen Schwingkreis definierten Ryhthmus zurückzuleiten ;
— eine sogenannte Übertragungsvorrichtung (32), die an die Ausgänge des Pufferregisters und der Phasenvergleichsvorrichtung angeschlossen ist ; und
— eine Frequenzteilervorrichtung, die an die besagte Übertragungsvorrichtung angeschlossen ist und das besagte interne Taktsignal abgibt.

2. Uhr mit Phasenverriegelung gemäss Anspruch 1, dadurch gekennzeichnet, dass m = 3.

3. Uhr mit Phasenverriegelung gemäss Anspruch 2, dadurch gekennzeichnet, dass die besagte Korrektursteuerinformation aus drei logischen Informationen besteht, von denen jede dafür bestimmt ist, den von einem der drei Dekoder gelieferten Zahlenwert an den Ausgang der besagten Multiplexiervorrichtung (22) zu lenken.

4. Uhr mit Phasenverriegelung gemäss Anspruch 3, dadurch gekennzeichnet, dass die drei Dekoder (DECOD) die Vorgänge ausführen, die darin bestehen, den Zahlenwert Null, Eins oder Zwei zu dem an ihren Eingängen angelegten Zahlenwert x hinzuzuaddieren.

5. Uhr mit Phasenverriegelung gemäss Anspruch 4, dadurch gekennzeichnet, dass, solang zu den vom Signal des örtlichen Schwingkreises (10) definierten Augenblicken keine Flanke vorgegebener Richtung am externen Taktsignal ansteht, die Multiplexiervorrichtung gesteuert wird, um die vom

7

Dekoder, der den Rechenvorgang x + 1 ausführt, abgegebene Information in das Pufferregister zu lenken.

6. Uhr mit Phasenverriegelung gemäss Anspruch 1, dadurch gekennzeichnet, dass die Phasenvergleicher- und Steuervorrichtung (20) einen Beschleunigungs- oder Verlangsamungsbefehl abgibt, je nachdem, ob der logische Pegel der internen Uhr zum Zeitpunkt des Auftretens eines·vorgegebenen Richtungsübergangs des externen Taktsignals hoch oder niedrig ist.

**0 134 374**

FIG. 1

FIG. 2

FIG. 3

FIG.4

FIG . 5

**0 134 374**

FIG. 6

FIG . 7

FIG . 8